## Europäisches Patentamt
## European Patent Office
## Office européen des brevets

(19)

(11) Publication number: **0 047 118**
**A1**

(12)

# EUROPEAN PATENT APPLICATION

(21) Application number: 81303857.7

(22) Date of filing: 24.08.81

(51) Int. Cl.³: **C 04 B 33/04**
**B 01 D 21/01**

(30) Priority: 28.08.80 US 182267

(43) Date of publication of application:
10.03.82 Bulletin 82/10

(84) Designated Contracting States:
AT BE CH DE FR GB IT LI LU NL SE

(71) Applicant: CALGON CORPORATION
Route 60-Campbell's Run Road
Robinson Township Pennsylvania 15205(US)

(72) Inventor: Aufman, Joseph A.
516 Harrogate Road
Pittsburgh Pennsylvania 15241(US)

(74) Representative: Crampton, Keith John Allen et al,
D YOUNG & CO 10 Staple Inn
London WC1V 7RD(GB)

(54) Vacuum filtration of clay slurries.

(57) Hydrolysed polyacrylamides are used as flocculants in the vacuum filtration of clay slurries. From 0.1 to 0.25 Kg of a hydrolysed polyacrylamide is added per dry tonne of Kaolin clay.

EP 0 047 118 A1

Croydon Printing Company Ltd.

"VACUUM FILTRATION OF CLAY SLURRIES"

This application relates to a process for dewatering Kaolin clay.

More particularly, this invention relates to an improved process for dewatering Kaolin clay slurries by using hydrolyzed polyacrylamides as flocculants in the vacuum filtration of such slurries.

Kaolin clay is normally processed as a slurry which is dewatered on a vacuum filter. Heretofore, flocculants have not been used as dewatering aids because they adversely affected the viscosity of the resultant clay slip, thereby adversely affecting subsequent redispersion of the clay slip for shipment as a slurry and resultant use.

It has now been discovered that when a low to medium molecular weight hydrolyzed polyacrylamide is used as a flocculant in the vacuum filtration of Kaolin

2

clay slurries, the cake dryness and yield from the vacuum filter is increased. As used herein, the term "Kaolin clay" means a white clay used as a paper coating and filler, paint pigment or in the manufacture of ceramics. The low to medium molecular weight hydrolysed polyacrylamides useful in the practice of the present invention have a molecular weight of from $1.5 \times 10^6$ to $4.0 \times 10^6$, when measured by low angle light scattering. By "hydrolyzed polyacrylamide" is meant a polyacrylamide ranging in hydrolysis from 5 to 30 percent, preferably between 15 and 25 percent, or a copolymer of acrylamide and acrylic acid containing 5 to 30 percent acrylic acid units. The polymers useful in the present invention may be prepared by conventional polymerization processes. In accordance with the teachings of the present invention, these polymers may be used at a dosage of 0.1 to 0.25 Kg. of polymer per dry tonne of Kaolin clay and may be added to the slurry at any point prior to addition to the vacuum filters.

This invention may be illustrated by the data set forth in Table I in which 3 to 4 liters of sludge is conditioned with polymer at the optimum dosage, as determined by the Filter Leaf Test. The fabric-covered filter leaf is immersed in the conditioned sludge and the pressure on it reduced to half the ambient while the leaf is gently swirled through the sludge for 30 seconds. The leaf is removed from the bucket and quickly turned upright 180° while the vacuum is continued and the cake is allowed to dry for 90 seconds. After 90 seconds, the vacuum is shut off and the leaf turned

sideways (90°) to see if the cake will fall off the cloth.  If it will not fall off, then it is scraped off in one continuous motion with a spatula and the following is noted:

> (a)  the ease or difficulty encountered in scraping the cake from the cloth;
>
> (b)  the amount of cake left on the cloth after scraping;
>
> (c)  cake thickness;
>
> (d)  cake dryness; and
>
> (e)  suspended solids in filtrate.

The cloth is washed with a water spray and the above steps are repeated four times using a freshly conditioned sludge sample each time to indicate any tendency of the cloth to "blind".

### TABLE I

#### Filter Leaf Test Results

| Product | Dosage (ppm) | Dry Solids (g) | Cake Weight (g) | Percent Moisture |
|---------|--------------|----------------|-----------------|------------------|
| Blank   |              | 14.91          | 25.8            | 42.2             |
| E-1264  | 50           | 16.00          | 26.9            | 40.5             |
| E-1264  | 85           | 15.15          | 25.5            | 40.6             |
| Blank   |              | 14.40          | 25.8            | 44.2             |
| E-1264  | 40           | 15.68          | 26.9            | 41.7             |
| E-1264  | 60           | 15.59          | 26.2            | 40.5             |
| Blank   |              | 14.87          | 26.0            | 42.8             |

4

## CLAIM

A process for dewatering Kaolin clay slurries by vacuum filtration which comprises adding to the slurry from 0.1 to 0.25 Kg per dry tonne of Kaolin clay of a hydrolysed polyacrylamide having a molecular weight of from 1.5 to $10^{6}$ to $4.0 \times 10^{6}$.

0047118

Application number

EP 81 30 3857.7

# EUROPEAN SEARCH REPORT

European Patent Office

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 505 233 (ENGLISH CLAYS LOVERING POCHIN & CO.) <br> * claims 1, 4 * | 1 | C 04 B 33/04 <br> B 01 D 21/01 |
| | DE - A - 2 329 454 (J.M. HUBER CORP.) <br> * page 2, lines 7 to 21 * | 1 | |
| A | DE - A - 2 337 337 (CALGON CORP.) <br> * page 2, lines 29 to 33, pages 9, 10 * | 1 | |
| A | DE - A - 2 311 939 (SALA MASKINFABRIKS) | | |

**TECHNICAL FIELDS SEARCHED (Int. Cl.³)**

C 04 B 33/00

B 01 D 21/01

B 01 F 17/00

B 28 C 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| Place of search | Date of completion of the search | Examiner |
|---|---|---|
| Berlin | 12-10-1981 | HÖRNER |

The present search report has been drawn up for all claims

EPO Form 1503.1 06.78